(19) Europäisches Patentamt / European Patent Office / Office européen des brevets

(11) **EP 3 724 611 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **19709700.9**

(22) Anmeldetag: **06.03.2019**

(51) Internationale Patentklassifikation (IPC):
*G01F 15/075* (2006.01)   *G01F 15/063* (2022.01)
*G01D 4/00* (2006.01)   *G01F 1/36* (2006.01)
*G06Q 50/06* (2024.01)   *G06Q 10/20* (2023.01)
*G06Q 30/0283* (2023.01)   *G06Q 30/04* (2012.01)

(52) Gemeinsame Patentklassifikation (CPC):
**G01F 15/0755; G01D 4/00; G01F 1/36; G01F 15/063; G06Q 30/0283; G06Q 30/04; G06Q 50/06;** F24F 11/50; G01D 2204/16; G06Q 10/20

(86) Internationale Anmeldenummer:
**PCT/EP2019/055598**

(87) Internationale Veröffentlichungsnummer:
**WO 2019/170765 (12.09.2019 Gazette 2019/37)**

(54) **VORRICHTUNG UND VERFAHREN ZUR LUFTMENGENERFASSUNG**

APPARATUS AND METHOD FOR ASCERTAINING AIR QUANTITIES

DISPOSITIF ET PROCÉDÉ DE DÉTECTION DE QUANTITÉ D'AIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2018 DE 102018105063**

(43) Veröffentlichungstag der Anmeldung:
**21.10.2020 Patentblatt 2020/43**

(73) Patentinhaber: **ebm-papst Mulfingen GmbH & Co. KG**
**74673 Mulfingen (DE)**

(72) Erfinder: **SAUER, Thomas**
**97980 Bad Mergentheim (DE)**

(74) Vertreter: **Staeger & Sperling Partnerschaftsgesellschaft mbB**
**Sonnenstraße 19**
**80331 München (DE)**

(56) Entgegenhaltungen:
| DE-A1-102005 007 914 | DE-A1-102015 101 407 |
| US-A1- 2014 297 210 | US-A1- 2015 323 394 |
| US-A1- 2017 011 318 | |

EP 3 724 611 B1

**Beschreibung**

Die vorliegende Erfindung betrifft ein Verfahren sowie eine Luftmengenerfassungs- und Abrechnungsvorrichtung gemäß dem Oberbegriff von Patentanspruch 1.

Üblicherweise werden Ventilatoren eingesetzt, um Luft in lufttechnischen Anlagen zu bewegen und einen Luftvolumenstrom bereit zu stellen. Es ist dabei gängige Praxis, dass der Anlagenbetreiber die dazu benötigten Ventilatoren oder Luftfördereinrichtungen erwirbt und in eigener Verantwortung betreibt und hierzu die Geräte auch körperlich besitzen muss oder kaufen muss. Aus den Druckschriften DE 10 2015 101407 A1 und DE 10 2005 007914 A1 sind Lösungen bekannt, wie Energiemengen, die in einem Fluid enthalten sind und zu Verbrauchern bzw. Endverbrauchern befördert werden, erfasst werden können. Dies kann beispielweise, wie in der DE 10 2015 101407 A1 beschrieben, mit einer Klimaanlage erfolgen.

In der Regel benötigen Anwender allerdings nicht zwingend einen Ventilator als solchen, sondern es besteht lediglich ein Bedarf nach bewegter Luft. Im Stand der Technik fehlt es derzeit an geeigneten Vorrichtungen, um einem Anwender oder einem Kunden eine bestimmte von diesem Anwender benötigte Luftmenge zur Verfügung zu stellen, ohne dass der Kunde hierfür technische Komponenten wie Ventilatoren oder Luftfördereinrichtungen erwerben müsste. Für manche Anwender wäre es daher vorteilhaft, wenn diese die für ihre Applikation erforderliche Luftmenge, das heißt das dazu erforderliche bewegte Luftvolumen, als eine Art Dienstleistung von einem Anlagenbetreiber erhalten könnten. Es bedarf daher einer technischen Lösung, bei der die Menge der bewegten Luft über einen bestimmten Zeitraum erfasst und dann zur Abrechnung gegenüber dem Verwender gebracht werden kann.

Es ist daher Aufgabe der vorliegenden Erfindung, eine technische Vorrichtung und ein Verfahren bereitzustellen, mit dem es möglich ist, über einen definierten Volumenstrom über eine bestimmte Zeitspanne eine jeweils für einen Anwender erforderliche Luftmenge bereitzustellen und ferner diese bereitgestellte Luftmenge gegenüber dem Anwender abrechnen zu können. Diese Aufgabe wird gelöst mit einer Vorrichtung gemäß Patentanspruch 1.

Erfindungsgemäß wird hierzu eine Luftmengenerfassungs- und Abrechnungsvorrichtung bereitgestellt umfassend eine Luftfördereinrichtung zum Erzeugen eines Luftvolumenstroms durch einen Luftdurchtritt, eine Messeinrichtung ausgebildet zum Messen von lufttechnischen Parametern des jeweiligen Luftvolumenstroms, eine Auswerteeinheit zum Auswerten der gemessenen Parameter, um daraus das gesamte Luftvolumen, das über einen Zeitraum T durch den Luftdurchtritt von der Luftfördereinrichtung gefördert wurde, zu ermitteln, eine Übertragungseinrichtung zum Übertragen des von der Auswerteeinheit ermittelten Wertes für das Luftvolumen an eine Validierungseinrichtung und eine Validierungseinrichtung, welche dem Luftvolumenstrom oder dem ermittelten Luftvolumen einen wirtschaftlichen Wert zuordnet bzw. mit diesem verknüpft, um daraus einen Abrechnungswert für das erzeugte Luftvolumen zu erhalten und gegebenenfalls eine Rechnung bereitzustellen.

Als lufttechnische Parameter eignen sich z. B. die Parameter Temperatur oder Luftfeuchtigkeit, welche dann auch mittelbar zur Validierung heran gezogen werden können.

Erfindungsgemäß ist ferner vorgesehen, dass dabei die Validierungseinrichtung ausgebildet ist, aus dem gesamten ermittelten Luftvolumen und der entsprechenden Messdauer der Luftfördereinrichtung auch eine Restlebensdauer zu berechnen. Hierzu können insbesondere Kennwerte, Kennlinien und Erfahrungswerte in einer Datenbank für jeden Ventilatortyp hinterlegt werden, so dass für den jeweils im Einsatz befindlichen Ventilator, ausgehend aus dem ermittelten Luftvolumen und dem für diesen Ventilator insgesamt förderfähigen Luftvolumen, die Restlebensdauer zum jeweiligen Zeitpunkt ermittelt werden kann, und zwar aus der Differenz des geförderten Luftvolumens und des durchschnittlich über die Lebensdauer durchschnittlich förderbaren Luftvolumens.

In einer ebenfalls vorteilhaften Ausgestaltung der Erfindung ist vorgesehen, dass die Validierungseinrichtung auf Kundendaten in einer Datenbank eines Rechenzentrums zugreifen kann, um dem erfassten Luftvolumenstrom entsprechend einem in der Datenbank hinterlegten kundenspezifischen Wert einen Abrechnungsbetrag zuzuweisen und daraus eine analoge oder digitale Rechnung zu erstellen. Kundendaten im Sinne der vorliegenden Erfindung sind gleichsam Daten eines bestimmten Anwenders, Kunden oder eines Abnehmers eines Luftvolumens in einer oder in mehreren Anlagen.

Es ist ebenfalls vorteilhaft, wenn ferner eine Übermittlungseinrichtung vorgesehen ist, um den ermittelten Abrechnungswert oder eine Rechnung basierend auf dem Abrechnungswert an eine externe Schnittstelle, zum Beispiel eine Kundenschnittstelle, oder eine speziell dazu definierte Schnittstelle zu übertragen. Auf diese Weise ist es möglich, dass zu festen Abrechnungszeiträumen die jeweils bis zu diesem Zeitraum verbrauchte Luftmenge bzw. das verbrauchte Luftvolumen unmittelbar gegenüber dem Anwender abgerechnet werden kann.

Es ist in einer weiteren vorteilhaften Ausgestaltung der Erfindung vorgesehen, dass die Übermittlungseinrichtung ausgebildet ist, um die ermittelte Restlebensdauer an eine externe Schnittstelle zu übertragen. Auf diese Weise ist es nicht nur möglich, eine bereits von der Luftfördereinrichtung geförderte Luftmenge zu ermitteln, wertmäßig zu validieren und über eine Abrechnungsfunktion an den Anwender zu fakturieren, sondern auch möglich, die verbleibende Standzeit der Luftfördereinrichtung regelmäßig zu bestimmen, um denjenigen Zeitpunkt festzustellen bzw. vorhersagen zu können, wann die Luftfördereinrichtung auszuwechseln oder zu warten ist.

Mit Vorteil kann ferner vorgesehen sein, dass die Messeinrichtung ausgebildet ist, einen Druckabfall oder insbesondere den Wirkdruck als lufttechnischen Parameter zu erfassen, und zwar an einer Messposition, vorzugsweise am Luftdurchtritt, zur Bestimmung des Luftvolumens, welches zur Abrechnung gebracht werden soll. Denkbar sind auch andere digitale oder analoge Messeinrichtungen, die dazu geeignet sind, einen solchen lufttechnischen Parameter des Volumenstroms zu erfassen, aus dem sich die geförderte Luftmenge ermitteln lässt.

Ebenfalls von Vorteil ist es, wenn die Messeinrichtung ausgebildet ist, den oder die lufttechnischen Parameter über einen gewünschten Zeitraum kontinuierlich oder zumindest in diskreten aufeinanderfolgenden, insbesondere festen Zeitabständen zu erfassen. So kann zum Beispiel vorgesehen sein, dass im Minutentakt die Messeinrichtung einen spezifisch ausgewählten lufttechnischen Parameter, wie zum Beispiel den Druckabfall, am Luftdurchtritt des Ventilators misst und aus den aufeinanderfolgenden gemessenen Daten die geförderte Luftmenge bzw. das verbrauchte Luftvolumen erfasst wird.

In einer weiteren vorteilhaften Ausgestaltung der Erfindung ist vorgesehen, dass die Auswerteeinheit einen Rechenoperator, vorzugsweise einen digitalen Integrator, aufweist, der ausgebildet ist, durch Integration über einen bestimmten Zeitraum T aus den gemessenen zeitlich aufeinanderfolgenden lufttechnischen Parametern ein Gesamtvolumenstrom zu berechnen. Mit Vorteil ist dabei vorgesehen, dass die Zeitspanne frei skalierbar und wählbar ist, um auf diese Weise Abrechnungszeiträume mit dem Anwender abstimmen und definieren zu können.

Besonders vorteilhaft ist eine Ausgestaltung, bei der die Auswerteeinheit einen Mikrocontroller aufweist, um auf diese Weise mit standardisierten Controllerprozessen die Auswerteaufgabe zu bewerkstelligen.

In einer vorteilhaften Ausführungsform der Erfindung ist weiter vorgesehen, dass die Übermittlungseinrichtung ausgebildet ist, die Daten drahtlos oder drahtgebunden über eine Netzwerktopologie, vorzugsweise über eine herkömmliche Netzwerktopologie, zu übertragen.

Ein weiterer Aspekt der vorliegenden Erfindung betrifft ein Verfahren zum Erfassen und Abrechnen eines von einer Luftfördereinrichtung erzeugten Volumenstroms, und zwar vorzugsweise mit einer Luftmengenerfassungs- und Abrechnungsvorrichtung, wie diese zuvor beschrieben ist. Dieses Verfahren umfasst dabei die folgenden Schritte:

    a) Erzeugen eines Luftvolumenstroms durch einen Luftdurchtritt einer Luftfördereinrichtung,
    b) Erfassen von lufttechnischen Parametern des Luftvolumenstroms über einen vordefinierten Zeitraum T am Luftdurchtritt, und zwar mittels der Messeinrichtung,

    c) Auswerten der gemessenen Parameter, um daraus das gesamte Luftvolumen, das über den Zeitraum T durch den Luftdurchtritt von der Luftfördereinrichtung gefördert wurde, zu ermitteln,

    d) Übertragen des von der Auswerteeinheit ermittelten Wertes für das Luftvolumen an einer Validierungseinrichtung und

    e) Validieren eines wirtschaftlichen Wertes mittels der Validierungseinrichtung korrespondierend zum erfassten Luftvolumen, um daraus einen Abrechnungswert für das erzeugte Luftvolumen zu berechnen.

Erfindungsgemäß ist außerdem vorgesehen, dass ergänzend zum Erfassen und Abrechnen eines Luftvolumens auch die Restlebensdauer der Luftfördereinrichtung aus dem in den Schritten b) und c) ermittelten Luftvolumen und der entsprechenden Messdauer der Luftfördereinrichtung durch die Auswerteeinheit ermittelt wird. In einer ebenfalls vorteilhaften Ausgestaltung des erfindungsgemäßen Verfahrens ist vorgesehen, dass die Restlebensdauer der Luftfördereinrichtung über eine insbesondere externe Schnittstelle an eine zum Empfang der Daten geeignete Empfangseinheit übertragen wird.

Die vorstehend offenbarten Merkmale sind dabei beliebig kombinierbar, soweit dies technisch bei der Umsetzung der Erfindung sinnvoll möglich ist und diese nicht im technischen Widerspruch zueinanderstehen, auch wenn diese Kombination der Merkmale nicht ausdrücklich offenbart ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

    Fig. 1 einen schematischen Systemaufbau eines nicht erfindungsgemäßen Ausführungsbeispiels,

    Fig. 2 eine Ausgestaltung der Erfindung 4und

    Fig. 3 eine schematische Ansicht eines Ventilators in einem System gemäß den Figuren 1 und 2.

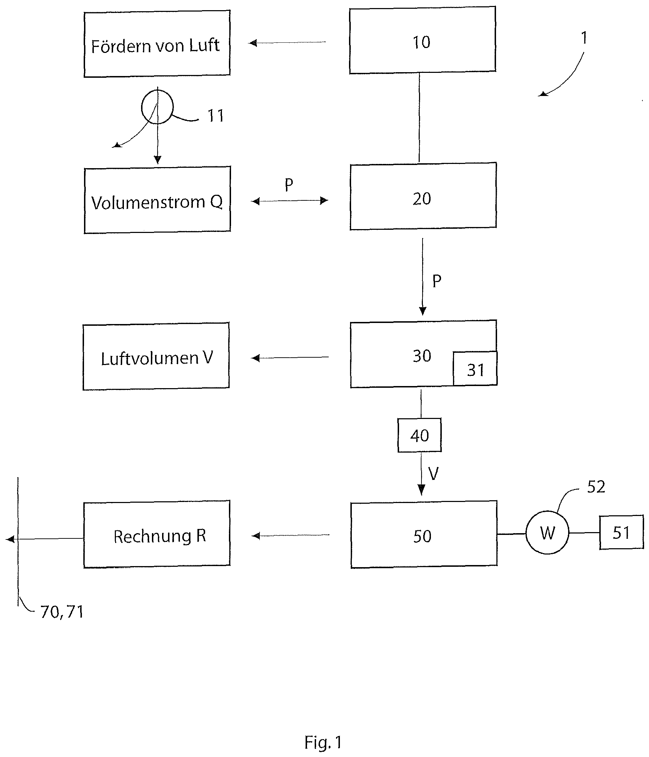

Die Figuren sind lediglich beispielhaft schematisch. Gleiche Bezugszeichen in den Figuren weisen auf gleiche funktionale und/oder strukturelle Merkmale hin. Die Erfindung wird nachfolgend mit Bezug auf die Fig. 1 bis 3 anhand beispielhafter Ausführungsformen näher erläutert.

Gezeigt ist jeweils eine Luftmengenerfassungs- und Abrechnungsvorrichtung 1 jeweils umfassend eine Luftfördereinrichtung 10, eine Messeinrichtung 20, eine Auswerteeinrichtung 30, eine Übertragungseinrichtung 40 und eine Validierungseinrichtung 50.

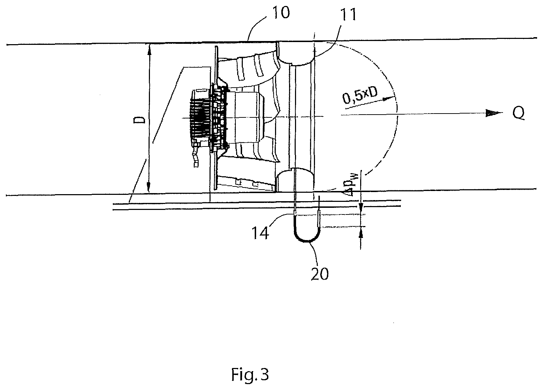

Die Luftfördereinrichtung 10 ist zum Beispiel ein Ventilator und dient zum Erzeugen eines bestimmten Volumenstroms durch den ebenfalls dargestellten Luftdurchtritt 11. Dies soll vereinfacht eine anwendungsbezogene Einbausituation darstellen, bei dem einem Anwender ein bestimmtes Luftvolumen über einen definierten Volumenstrom durch den Luftdurchtritt 11 (wie in Figur 3 dargestellt) zur Verfügung gestellt werden soll.

Die lediglich beispielhaft dargestellte Messeinrichtung 20 ist ausgebildet zum Messen von wenigstens einem lufttechnischen Parameter P des jeweiligen Luftvolumenstroms Q, der durch den Luftdurchtritt 11 hindurchtritt. Der hierzu ausgewählte lufttechnische Parameter P ist ein solcher, der jeweils im Zusammenhang mit dem Luftvolumenstrom Q eine unmittelbare Berechnungsmöglichkeit des über einen Zeitraum T durch den Luftdurchtritt 11 hindurchtretenden Luftvolumens ermöglicht.

Die Auswerteeinheit 30 ist ausgebildet zum Auswerten der gemessenen Parameter P, um daraus das gesamte Luftvolumen, das über einen Zeitraum T durch den Luftdurchtritt 11 von der Luftfördereinrichtung 10 gefördert wurde, zu ermitteln.

Zur Messung eines lufttechnischen Parameters kann zum Beispiel die Messung des Druckabfalls an einer ringförmigen Düse am Luftdurchtritt 11 genutzt werden. Der so gemessene Druckabfall kann mit einem Korrekturfaktor in einen Volumenstrom umgerechnet werden.

Zur Ermittlung des Volumenstroms kann der Zusammenhang zwischen dem statischen Druck und dem Wirkdruckverhalten herangezogen werden. Der Volumenstrom lässt sich aus dem Wirkdruck (Differenzdruck der statischen Drücke) nach folgender Gleichung berechnen:

$$.Q = K * \sqrt{\Delta PW}$$

Hierbei stellt K einen Faktor dar, der die spezifischen Düseneigenschaften der ringförmigen Düse berücksichtigt. $\Delta Pw$ stellt dabei den Differenzdruck der statischen Drücke dar. Q bestimmt den Volumenstrom.

Vorteilhaft ist es, wenn die Druckabnahme an zum Beispiel vier Stellen am Umfang der Einströmdüse E erfolgt. Ein kundenseitiger Anschluss kann über eine eingebaute T-Schlauchverbindung 14 erfolgen. Eine solche Schlauchverbindung 14 ist zum Beispiel geeignet für den Anschluss von Pneumatikschläuchen, um mit standardisiertem technischem Equipment die Messung vollziehen zu können.

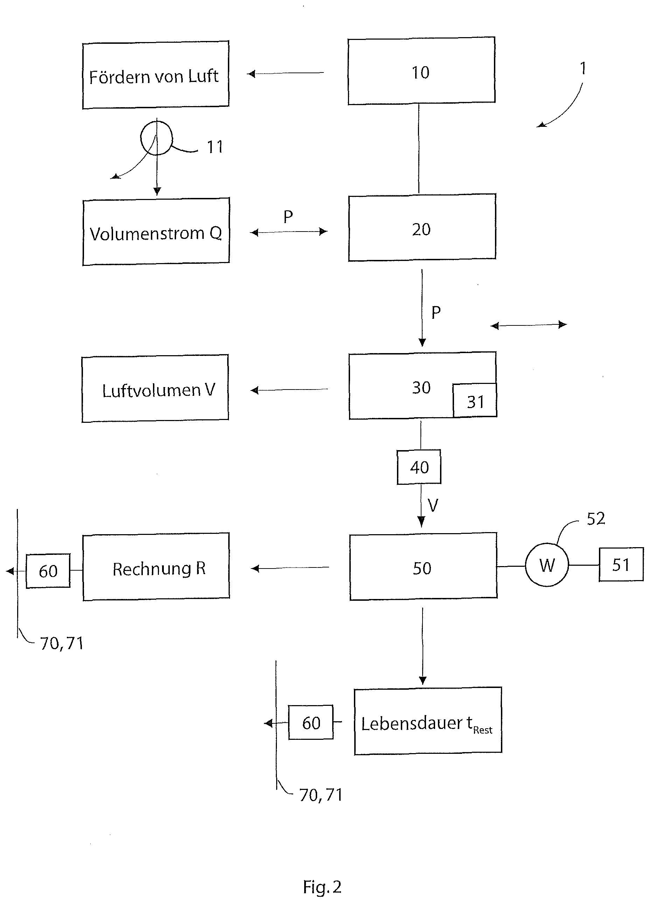

Werden nun zum Beispiel ausreichend häufig in einem bestimmten Messtakt (zum Beispiel einmal pro Minute) die Messwerte des Volumenstroms Q erfasst und gespeichert und über einen Integrator integriert, erhält man die in einer bestimmten Zeiteinheit bewegte Luftmenge, zum Beispiel in Kubikmeter pro Stunde. Dadurch lässt sich die zum Beispiel in einem Monat bewegte Luftmenge konkret bestimmen, die dann gegenüber dem Anwender oder Abnehmer abgerechnet werden kann. Um eine Abrechnung zu ermöglichen, verfügt die erfindungsgemäße Vorrichtung über eine Einheit, die das Versenden der Daten in ein Rechenzentrum ermöglicht. Eine solche Übertragungseinrichtung 40 ist beispielhaft in den Fig. 1 und 2 gezeigt. Diese Übertragungseinrichtung 40 dient zum Übertragen des von der Auswerteeinheit 30 ermittelten Wertes für das Luftvolumen an eine gesonderte Validierungseinrichtung 50. Die Validierungseinrichtung 50 verknüpft das ermittelte Luftvolumen mit einem für den Anwender bzw. Abnehmer hinterlegten wirtschaftlichen Wert W, um daraus einen konkreten Abrechnungswert für das erzeugte Luftvolumen V zu erhalten.

Wie in der Ausführungsform der Fig. 2 ersichtlich, ist die Luftmengenerfassungs- und Abrechnungsvorrichtung 1 ferner so ausgebildet, dass die Validierungseinrichtung 50 aus dem gesamten ermittelten Luftvolumen V und der entsprechenden Messdauer der Luftfördereinrichtung 10 eine Restlebensdauer $T_{rest}$ berechnen kann. Die Bestimmung einer zu erwartenden Restlebensdauer kann vorzugsweise durch einen Mikrocontroller erfolgen.

Die Auswerteeinheit 30 kann ferner so ausgebildet sein, dass eine Digitalisierung bei analogem Messwert und Umrechnung des Volumenstroms (Kubikmeter pro Stunde) in bewegtes Luftvolumen (Kubikmeter) durch Integration über einen Messzeitraum des Volumenstroms in der Messeinrichtung erfolgt.

Wie ebenfalls in den Fig. 1 und 2 ersichtlich, steht die Validierungseinrichtung 50 in Verbindung mit einer Datenbank 52 eines Rechenzentrums 51. Da die Validierungseinrichtung 50 auf diese Daten zugreifen kann, um dem erfassten Luftvolumenstrom entsprechend einem in dieser Datenbank hinterlegten kundenspezifischen Wert W einen Abrechnungsbeitrag zuzuweisen, lässt sich auf diese Weise eine analoge oder digitale Rechnung erstellen, ohne dass es einer weiteren manuellen Bearbeitung bedürfen würde.

Anders ausgedrückt bedeutet dies, dass das Erstellen einer Rechnung pro Zeiteinheit erfolgen kann, zum Beispiel pro Monat und darauf basierend eine automatische Übertragung der Rechnung über die Schnittstelle 70, 71 in ein zentrales Verwaltungssystem erfolgen kann oder an einem Endgerät.

Bei der Ausführungsform nach Fig. 2 kann ferner vorgesehen werden, dass eine Austausch- oder Reparaturinformation bereitgestellt wird, die ebenfalls an die Schnittstelle 70, 71 geleitet wird, um anzuzeigen, dass der Ventilator demnächst seine Restlebensdauer erreicht hat. Abhängig von Beschaffungszeiträumen kann man somit rechtzeitig vor Erreichen der prognostizierten Lebensdauer der Luftfördereinrichtung geeignete Maßnahmen ergreifen, um eine Betriebsunterbrechung der Anlage zu verhindern oder jedenfalls zu minimieren.

Wie ferner den beiden Ausführungsformen nach Fig. 1 und Fig. 2 zu entnehmen ist, verfügt die Auswerteeinheit 30 über einen speziellen Rechenoperator 31, vorzugsweise einen digitalen Integrator, der ausgebildet ist, durch Integration über den Zeitraum T, aus den gemessenen zeitlich aufeinanderfolgenden lufttechnischen Parametern P ein Gesamtluftvolumen V zu berechnen. Die Auswerteeinheit 30 umfasst hier einen Mikrocontroller. Allerdings können die Auswerteeinheit 30, die Übertragungseinrichtung 40 und die Validierungseinrichtung 50 auch mit anderen, hier nicht näher beschriebenen, technischen Mitteln umgesetzt werden.

Die Erfindung beschränkt sich in ihrer Ausführung insofern nicht auf die beiden vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, wie beispielsweise die Integration der Funktion eines Rechenzentrums in einer Recheneinheit der Luftmengenerfassungs- und Abrechnungsvorrichtung. Ebenso kann vorgesehen sein, dass die Übertragungseinrichtung 40 und die Validierungseinrichtung 50 durch eine einzige kombinierte Einrichtung mit den entsprechenden technischen Funktionen bereitgestellt werden.

**Patentansprüche**

1.　Luftmengenerfassungs- und Abrechnungsvorrichtung (1) umfassend:

> a. eine Luftfördereinrichtung (10) zum Erzeugen eines Luftvolumenstroms (Q) durch einen Luftdurchtritt (11),
> b. eine Messeinrichtung (20) ausgebildet zum Messen von lufttechnischen Parametern (P) des jeweiligen den Luftdurchtritt (11) hindurchtretenden Luftvolumenstroms (Q),
> c. eine Auswerteeinheit (30) zum Auswerten der gemessenen Parameter (P), um daraus das gesamte Luftvolumen (V), das über einen Zeitraum t durch den Luftdurchtritt (11) von der Luftfördereinrichtung (10) gefördert wurde, zu ermitteln,
> d. eine Übertragungseinrichtung (40) zum Übertragung des von der Auswerteeinheit (30) ermittelten Wertes für das Luftvolumen (V) an eine Validierungseinrichtung (50) und eine
> e. Validierungseinrichtung (50), welche dem Luftvolumenstrom (Q) oder das ermittelte Luftvolumen (V) mit einem wirtschaftlichen Wert (W) verknüpft, um daraus einen Abrechnungswert für das erzeugte Luftvolumen (V) zu erhalten,

**dadurch gekennzeichnet, dass** die Validierungseinrichtung (50) ferner ausgebildet ist, aus dem gesamten ermittelten Luftvolumen und der entsprechenden Messdauer der Luftfördereinrichtung (10) eine Restlebensdauer $t_{Rest}$ zu berechnen.

2.　Luftmengenerfassungs- und Abrechnungsvorrichtung (1) nach Anspruch 1, **dadurch gekennzeichnet, dass** die Validierungseinrichtung (50) auf Kundendaten in einer Datenbank (52) eines Rechenzentrums (51) zugreifen kann, um dem erfassten Luftvolumenstrom (V) entsprechend einem in der Datenbank hinterlegten kundenspezifischen Wert (W) einen Abrechnungsbetrag zuzuweisen und daraus eine analoge oder digitale Rechnung (R) zu erstellen.

3.　Luftmengenerfassungs- und Abrechnungsvorrichtung (1) nach Anspruch 1 oder 2, **dadurch gekennzeichnet, dass** ferner einer Übermittlungseinrichtung (60) vorgesehen ist, um den ermittelten Abrechnungswert oder eine Rechnung (R) an eine externe Schnittstelle (70) zu übertragen.

4.　Luftmengenerfassungs- und Abrechnungsvorrichtung (1) nach Anspruch 3, **dadurch gekennzeichnet, dass** die Übermittlungseinrichtung (60) ausgebildet ist, um die ermittelte Restlebensdauer $t_{Rest}$ an eine externe Schnittstelle (70, 71) zu übertragen.

5.　Luftmengenerfassungs- und Abrechnungsvorrichtung (1) nach einem der vorhergehenden Ansprüche, **dadurch gekennzeichnet, dass** die Messeinrichtung (20) ausgebildet ist einen Druckabfall oder den Wirkdruck als lufttechnischen Parameter (P) an einer Messposition am Luftdurchtritt (11) zur Bestimmung des Luftvolumens (V) zu erfassen.

6.　Luftmengenerfassungs- und Abrechnungsvorrichtung (1) nach einem der vorhergehenden Ansprüche, **dadurch gekennzeichnet, dass** die Messeinrichtung ferner ausgebildet ist, den oder die lufttechnischen Parameter (P) über einen gewünschten Zeitraum t kontinuierlich oder in diskreten aufeinanderfolgenden Zeitabständen $\Delta t$ zu erfassen.

7.　Luftmengenerfassungs- und Abrechnungsvorrichtung (1) nach Anspruch 6, **dadurch gekennzeichnet, dass** die Auswerteeinheit (30) einen Rechenoperator (31), vorzugsweise einen digitalen Integrator (31) aufweist, der ausgebildet ist, durch Integration über den Zeitraum t, aus den gemessenen zeitlich aufeinanderfolgenden lufttechnischen Parametern (P) ein Gesamtluftvolumen (V) zu berechnen.

8.　Luftmengenerfassungs- und Abrechnungsvorrichtung (1) nach einem der vorhergehenden Ansprüche, **dadurch gekennzeichnet, dass** die Auswerteeinheit (30) einen Microcontroller aufweist.

9.　Luftmengenerfassungs- und Abrechnungsvorrichtung (1) nach einem der vorhergehenden Ansprüche, **dadurch gekennzeichnet, dass** die Übermittlungseinrichtung (60) ausgebildet ist, die Daten drahtlos oder drahtgebunden über eine Netzwerktopologie zu übertragen.

10. Verfahren zum Erfassen und Abrechnen eines von einer Luftfördereinrichtung erzeugten Luftvolumens (V) mit einer Luftmengenerfassungs- und Abrechnungsvorrichtung (1) nach einem der vorhergehenden Ansprüche mit den folgenden Schritten:

a. Erzeugen eines Luftvolumenstroms (Q) durch einen Luftdurchtritt (11) mittels einer Luftfördereinrichtung (10),
b. Erfassen von lufttechnischen Parametern (P) des durch den Luftdurchtritt (11) hindurchtretenden Luftvolumenstroms (Q) über einen Zeitraum t mittels der Messeinrichtung (20),
c. Auswerten der gemessenen Parameter (P), um daraus das gesamte Luftvolumen (V), das über den Zeitraum t durch den Luftdurchtritt (11) von der Luftfördereinrichtung (10) gefördert wurde, zu ermitteln,
d. Übertragung des von der Auswerteeinheit (30) ermittelten Wertes für das Luftvolumen (V) an eine Validierungseinrichtung (50) und
e. Validieren eines wirtschaftlichen Wertes mittels der Validierungseinrichtung (50) korrespondierend zum erfassten Luftvolumen (V), um daraus einen Abrechnungswert für das erzeugte Luftvolumen (V) zu berechnen,

**dadurch gekennzeichnet, dass** ergänzend zum Erfassen und Abrechnen eines Luftvolumens auch eine Restlebensdauer $t_{Rest}$ der Luftfördereinrichtung aus dem in den Schritten b) und c) ermittelten Luftvolumen (V) und der entsprechenden Messdauer der Luftfördereinrichtung (10) durch die Auswerteeinheit (30) ermittelt wird.

11. Verfahren nach Anspruch 10, wobei die Restlebensdauer $t_{Rest}$ der Luftfördereinrichtung über eine externe Schnittstelle (70, 71) an eine Empfangseinheit übertragen wird.

**Claims**

1. An air quantity recording and invoicing device (1) comprising:

a. an air conveyor unit (10) for generating an air volume flow (Q) through an air passage (11),
b. a measuring unit (20) formed for measuring ventilation parameters (P) of the respective air volume flow (Q) passing through the air passage (11),
c. an evaluation unit (30) for analyzing the measured parameters (P) to ascertain therefrom the total air volume (V) which was conveyed over a period of time t through the air passage (11) by the air conveyor unit (10),
d. a transmission unit (40) for transmitting the value for the air volume (V) ascertained by the evaluation unit (30) to a validation unit (50), and a
e. validation unit (50), which links the air volume flow (Q) or the ascertained air volume (V) to an economic value (W) to obtain an invoicing value for the generated air volume (V) therefrom.

**characterized in that** the validation unit (50) is furthermore formed to calculate a remaining service life $t_{Rest}$ from the total ascertained air volume and the corresponding measurement period of the air conveyor unit (10).

2. The air quantity recording and invoicing device (1) as claimed in claim 1, **characterized in that** the validation unit (50) can access customer data in a database (52) of a computer center (51) in order to assign an invoicing amount to the recorded air volume flow (V) in accordance with a customer-specific value (W) stored in the database and to create an analog or digital invoice (R) therefrom.

3. The air quantity recording and invoicing device (1) as claimed in claim 1 or 2, **characterized in that** furthermore a transmission unit (60) is provided to transmit the ascertained invoicing value or an invoice (R) to an external interface (70).

4. The air quantity recording and invoicing device (1) as claimed in claim 3, **characterized in that** the transmission unit (60) is designed to transmit the ascertained remaining service life $t_{Rest}$ to an external interface (70, 71).

5. The air quantity recording and invoicing device (1) as claimed in any one of the preceding claims, **characterized in that** the measuring unit (20) is designed to record a pressure drop or the differential pressure as ventilation parameters (P) at a measurement position at the air passage (11) to determine the volume (V).

6. The air quantity recording and invoicing device (1) as claimed in any one of the preceding claims, **characterized in that** the measuring unit is furthermore designed to record the ventilation parameter or parameters (P) over a desired period of time t continuously or in discrete successive time intervals $\Delta t$.

7. The air quantity recording and invoicing device (1) as claimed in claim 6, **characterized in that** the evaluation unit (30) has an arithmetic operator (31), preferably a digital integrator (31), which is designed to calculate a total air volume (V) by integration over the period of time t, from the measured chronologically successive ventilation parameters (P).

8. The air quantity recording and invoicing device (1) as claimed in any one of the preceding claims, **characterized in that** the evaluation unit (30) has a microcontroller.

9. The air quantity recording and invoicing device (1) as claimed in any one of the preceding claims, **characterized in that** the transmission unit (60) is designed to transmit the data wirelessly or by wire via a network topology.

10. A method for recording and invoicing an air volume (V) generated by an air conveyor unit using an air quantity recording and invoicing device (1) as claimed in any one of the preceding claims, having the following steps:

   a. generating an air volume flow (Q) through an air passage (11) by means of an air conveyor unit (10),
   b. recording ventilation parameters (P) of the air volume flow (Q) passing through the air passage (11) over a period of time t at the air passage (11) by means of the measuring unit (20),
   c. evaluating the measured parameters (p) in order to determine the total air volume (V) which was conveyed by the air conveyor unit (10) through the air passage (11) over the period of time t,
   d. transmitting the value for the air volume (V) ascertained by the evaluation unit (30) to a validation unit (50), and
   e. validating an economic value by means of the validation unit (50) corresponding to the recorded air volume (V) to calculate an invoicing value for the generated air volume (V) therefrom,

   **characterized in that** in addition to the recording and invoicing of an air volume, the remaining service life $t_{Rest}$ of the air conveyor unit is also ascertained by the evaluation unit (30) from the air volume (V) and the corresponding measurement period of the air conveyor unit (10) ascertained in steps b) and c).

11. The method as claimed in claim 10, wherein the remaining service life $t_{Rest}$ of the air conveyor unit is transmitted via an external interface (70, 71) to a receiver unit.

## Revendications

1. Dispositif de détection et de facturation d'une quantité d'air (1), comprenant :

   a. un équipement de transport d'air (10) pour produire un débit d'air (Q) à travers un passage d'air (11),
   b. un équipement de mesure (20) réalisé pour mesurer des paramètres aérauliques (P) du débit d'air (Q) respectif traversant le passage d'air (11),
   c. une unité d'évaluation (30) pour évaluer les paramètres mesurés (P) afin d'établir à partir de ceux-ci le volume d'air total (V) qui a été transporté pendant une période t à travers le passage d'air (11) par l'équipement de transport d'air (10),
   d. un équipement de transmission (40) pour transmettre la valeur établie par l'unité d'évaluation (30) pour le volume d'air (V) à un équipement de validation (50), et
   e. un équipement de validation (50) qui associe au débit d'air (Q) ou au volume d'air (V) établi une valeur économique (W) afin d'obtenir à partir de celle-ci une valeur de facturation pour le volume d'air (V) produit,

   **caractérisé en ce que** l'équipement de validation (50) est en outre réalisé pour calculer à partir du volume d'air établi total et de la durée de mesure correspondante de l'équipement de transport d'air (10) une durée de vie résiduelle $t_{Rest}$.

2. Dispositif de détection et de facturation d'une quantité d'air (1) selon la revendication 1, **caractérisé en ce que** l'équipement de validation (50) peut accéder à des données client dans une base de données (52) d'un centre de calcul (51) afin d'attribuer un montant de facturation au débit d'air (V) détecté, selon une valeur (W) spécifique à un client mémorisée dans la base de données, et pour créer une facture analogique ou numérique (R) à partir de celui-ci.

3. Dispositif de détection et de facturation d'une quantité d'air (1) selon la revendication 1 ou 2, **caractérisé en ce qu'**en outre un équipement de transmission (60) est prévu pour transmettre la valeur de facturation établie ou une facture (R) à une interface externe (70).

4. Dispositif de détection et de facturation d'une quantité d'air (1) selon la revendication 3, **caractérisé en ce que** l'équipement de transmission (60) est réalisé pour transmettre la durée de vie résiduelle $t_{Rest}$ établie à une interface externe (70, 71).

5. Dispositif de détection et de facturation d'une quantité d'air (1) selon l'une quelconque des revendications précédentes, **caractérisé en ce que** l'équipement de mesure (20) est réalisé pour détecter une chute de pression ou la pression différentielle en tant que paramètres aérauliques (P) dans une position de mesure au niveau du passage d'air (11) afin de déterminer le volume d'air (V).

6. Dispositif de détection et de facturation d'une quantité d'air (1) selon l'une quelconque des revendications précédentes, **caractérisé en ce que** l'équipement de mesure est en outre réalisé pour détecter le(s) paramètre(s) aéraulique(s) (P) pendant une période t souhaitée en continu ou à des intervalles de temps consécutifs discrets Δt.

7. Dispositif de détection et de facturation d'une quantité d'air (1) selon la revendication 6, **caractérisé en ce que** l'unité d'évaluation (30) présente un opérateur mathématique (31), de préférence un intégrateur numérique (31), qui est réalisé pour calculer par intégration sur la période t un volume d'air total (V) à partir des paramètres aérauliques (P) mesurés qui se succèdent dans le temps.

8. Dispositif de détection et de facturation d'une quantité d'air (1) selon l'une quelconque des revendications précédentes, **caractérisé en ce que** l'unité d'évaluation (30) présente un microcontrôleur.

9. Dispositif de détection et de facturation d'une quantité d'air (1) selon l'une quelconque des revendications précédentes, **caractérisé en ce que** l'équipement de transmission (60) est réalisé pour transmettre les données avec ou sans fil à travers une topologie de réseau.

10. Procédé permettant de détecter et de facturer un volume d'air (V) produit par un équipement de transport d'air à l'aide d'un dispositif de détection et de facturation d'une quantité d'air selon l'une quelconque des revendications précédentes, comprenant les étapes suivantes consistant à :

a. produire un débit d'air (Q) à travers un passage d'air (11) au moyen d'un équipement de transport d'air (10),
b. détecter es paramètres aérauliques (P) du débit d'air (Q) traversant le passage d'air (11) pendant une période t au moyen de l'équipement de mesure (20),
c. évaluer les paramètres mesurés (P) afin d'établir à partir de ceux-ci le volume d'air total (V) qui a été transporté pendant la période t à travers le passage d'air (11) par l'équipement de transport d'air (10),
d. transmettre la valeur établie par l'unité d'évaluation (30) pour le volume d'air (V) à un équipement de validation (50), et
e. valider une valeur économique au moyen de l'équipement de validation (50) en correspondance avec le volume d'air (V) détecté afin de calculer à partir de celle-ci une valeur de facturation pour le volume d'air (V) produit,

**caractérisé en ce qu'**en plus de la détection et de la facturation d'un volume d'air, aussi une durée de vie résiduelle $t_{Rest}$ de l'équipement de transport d'air est établie par l'unité d'évaluation (20) à partir du volume d'air (V) établi dans les étapes b) et c) et de la durée de mesure correspondante de l'équipement de transport d'air (10).

11. Procédé selon la revendication 10, dans lequel la durée de vie résiduelle $t_{Rest}$ de l'équipement de transport d'air est transmise par une interface externe (70, 71) à une unité de réception.

Fördern von Luft

10

1

11

Volumenstrom Q

P

20

P

Luftvolumen V

30

31

40

V

Rechnung R

50

52

W

51

70, 71

Fig. 1

Fördern von Luft

11

Volumenstrom Q

P

10

20

P

Luftvolumen V

30

31

40

V

Rechnung R

60

70, 71

50

W

52

51

Lebensdauer $t_{Rest}$

60

70, 71

Fig. 2

Fig. 3

**IN DER BESCHREIBUNG AUFGEFÜHRTE DOKUMENTE**

**In der Beschreibung aufgeführte Patentdokumente**

- DE 102015101407 A1
- DE 102005007914 A1